# FASCICULE DE BREVET EUROPEEN

(11) **EP 3 320 242 B1**
(45) Date de publication et mention de la délivrance du brevet: **19.02.2020**
(21) Numéro de dépôt: 16741892.0
(22) Date de dépôt: 08.07.2016
(51) Int. Cl.: F16K 31/04

(54) **SYSTÈME D'ENTRAÎNEMENT**
ANTRIEBSSYSTEM
DRIVE SYSTEM

(30) Priorité: 10.07.2015 FR 1556630
(43) Date de publication de la demande: 16.05.2018
(73) Titulaire: MMT SA, 6304 Zug (CH)
(72) Inventeur: MELLERE, Cédric, 25190 Soulce Cernay (FR); MANA, Akim, 25420 Courcelles Les Montbeliard (FR)
(74) Mandataire: IP Trust
(86) Numéro de dépôt international: PCT/EP2016/066359
(87) Numéro de publication internationale: WO 2017/009262

(56) Documents cités:
- WO-A1-2015/106995
- US-A1- 2013 104 844
- US-B1- 6 651 952

## Description

### DOMAINE TECHNIQUE DE L'INVENTION

L'invention se rapporte au domaine des systèmes électriques d'entrainement d'un organe mobile, et plus particulièrement les systèmes d'entrainement de vanne de circulation de fluide que l'on trouve dans diverses industries, dont l'industrie automobile, pour la gestion des débits de gaz et de liquide, et qui nécessitent une fonction de sécurité assurant le retour à, ou le maintien, d'une position déterminée lors d'une défaillance électrique d'alimentation.

L'invention n'est toutefois pas limitée à des applications de vanne de circulation, et peut également s'appliquer à un organe mobile d'un système de commande d'embrayage ou de boite de vitesse, ou plus généralement d'un système permettant d'assurer deux positions stables de l'organe mobile, avec l'une d'entre elle dans laquelle l'organe mobile revient en toute circonstance en cas de défaillance (fonction dite « fail safe »).

Pour l'application préférentielle de commande de vanne, on s'intéresse aux systèmes de combustion (tels que les moteurs thermiques pour véhicule automobile, camion, engin de chantier, les chaudières thermiques, systèmes de ventilation...) fonctionnant grâce à l'explosion/combustion d'un mélange air / carburant dans la chambre de combustion. La boucle d'air du moteur, dont la fonction est l'acheminement, la gestion et l'évacuation de l'air alimentant le système, fonctionne à l'aide de différentes vannes dont certaines ont pour fonction de court-circuiter / éviter une partie de la boucle d'air. Ces vannes dites « bypass » sont généralement pilotées par des actionneurs pneumatiques composés d'une pompe à vide, d'une électrovanne et d'un poumon avec ressort de rappel.

Ce type d'actionneur fonctionne suivant un mode binaire (dit « On-Off ») : il ne peut prendre que 2 positions aux 2 extrémités de la course de l'actionneur. C'est l'électrovanne qui commande cet actionneur : lorsqu'elle n'est pas alimentée (électrovanne fermée), le poumon ne reçoit pas la dépression créée par la pompe à vide et reste ainsi dans sa position de repos sans consommer de courant. Quand l'électrovanne est alimentée, elle ne consomme que quelques dizaines de milliampères et elle alimente en dépression le poumon qui se déplace à l'autre extrémité de la course : il peut y rester ainsi indéfiniment sans consommer une grande quantité de courant. Lors d'une défaillance ou simplement lors d'une consigne de retour en position de repos, l'alimentation de l'électrovanne est coupée et le ressort de rappel intégré dans le poumon ramène le système en début de course.

Pour réduire encore les émissions de gaz polluants et la consommation en carburant, on souhaite supprimer la pompe à vide qui tourne en permanence pour des durées d'activation limitées. Les poumons et les électrovannes seraient alors remplacés par des actionneurs électriques qui doivent se piloter de manière équivalente sans que ces actionneurs ne consomment de courant dans les deux positions extrêmes de la course, tout en garantissant la fonction de sécurité, c'est-à-dire l'assurance de se placer dans une position déterminée en cas de défaillance.

L'exemple donné ci-dessus, relatif aux vannes by-pass, est particulièrement pertinent pour l'exposé de l'invention mais celle-ci ne se limite pas à ce seul exemple puisque tout organe mobile et plus particulièrement toute vanne de circulation de fluide nécessitant un retour en une position de sécurité lors d'une défaillance électrique peut être adressée par la présente invention.

### ETAT DE LA TECHNIQUE ANTERIEURE

**On** connait, dans l'état de la technique, la demande US20130104844 dans laquelle une position d'activation est maintenue sans consommation électrique de courant par l'action d'un blocage mécanique. La consommation électrique pour maintenir les positions d'activation et de sécurité est nulle, et le retour en position de sécurité est obtenu par l'activation d'un actionneur, via une commande électronique extérieure au système. Le système nécessite ainsi deux alimentations électriques spécifiques et dissociées pour maintenir les positions d'activation et de sécurité d'une part et l'activation de l'actionneur d'autre part. Le système doit être intelligent pour analyser la situation, ordonner et obtenir le retour en position et n'assure pas un retour en position de sécurité lorsqu'il existe une défaillance électrique ou une défaillance du système intelligent d'analyse.

On connait aussi une vanne « failsafe » décrite dans le brevet GB2266943. Cette vanne est commandée par un moteur électrique entraînant un organe mobile dont le positionnement de sécurité est assuré par un premier ressort. Le verrouillage de l'actionneur est réalisé à l'aide d'un solénoïde qui est alimenté en permanence pour assurer le blocage dans la position de travail. En cas de défaillance, le solénoïde est désactivé et un deuxième ressort libère le verrou de l'organe mobile, qui revient en position préférentielle sous l'action du premier ressort. Ainsi, le solénoïde consomme de manière permanente un courant électrique significatif pour maintenir la position préférentielle d'activation.

Le brevet américain US4771643 décrit un mécanisme de retour en position d'une vanne comprenant un actionneur destiné à entraîner une charge, avec un premier levier entraîné par l'actionneur, un second levier fixé à la charge, et un dispositif de verrouillage des deux leviers de sorte que la charge peut être entraînée par l'actionneur. Un système est également prévu pour déverrouiller les deux leviers et permettre ainsi à la charge de retourner jusqu'à une position prédéterminée lors de l'interruption de l'alimentation.

US6651952 décrit un système d'entrainement selon le préambule des revendications indépendantes 1 et 2.

### INCONVENIENTS DE L'ART ANTERIEUR

Dans les solutions de l'art antérieur, nous retrouvons donc deux types de système :
Dans le premier, le retour en position préférentielle est assuré par un ressort, et en régime normal un actionneur électrique s'oppose à l'action de ce ressort. Cela implique une consommation électrique permanente, du système et notamment de l'actionneur, avec une puissance élevée, correspondant à l'énergie nécessaire pour compenser l'action du ressort de retour en position préférentielle et de la charge.

Afin d'assurer une stabilité suffisante, les solutions de l'art antérieur nécessitent un surdimensionnement de ses composants, et notamment de l'actionneur qui doit présenter une puissance suffisante pour compenser la force exercée par le ressort et la charge, mais aussi les efforts parasites s'exerçant sur l'organe mobile, par exemple les vibrations et chocs transmis au système. La consommation électrique peut donc représenter en permanence un niveau de plusieurs ampères.

Dans le deuxième, il comporte un moyen de verrouillage mécanique de l'actionneur en position préférentielle d'activation, ce moyen de verrouillage reprenant seul la force exercée par le ressort de retour en position de sécurité, la charge et les efforts parasites, ce moyen de verrouillage permettant de supprimer la consommation de courant de l'actionneur. En revanche et pour conserver la fonction de retour en position de sécurité en cas de défaillance de l'alimentation électrique, le moyen de verrouillage, généralement un solénoïde intégrant son propre ressort de rappel, consomme un courant faible mais significatif pour rester dans sa position de verrouillage, le ressort de rappel et la charge appliquée au solénoïde étant largement inférieurs au ressort de retour en position de sécurité et à la charge appliqués à l'actionneur.

### EXPOSE DE L'INVENTION

L'objet de l'invention est ainsi de répondre aux problèmes exposés précédemment en proposant un système d'entrainement permettant non seulement d'assurer le maintien des positions stables avec une consommation de courant limitée à la consommation d'un circuit électronique, typiquement quelques dizaines de milliampères, mais aussi de garantir le retour en une position de sécurité lorsqu'une défaillance électrique de l'alimentation arrive.

Plus précisément, les actionneurs ne consomment aucun courant en phase de maintien. Le circuit électronique présente une consommation électrique très faible, même lorsqu'il comporte des composants actifs tels qu'un microcontrôleur. Il est même possible de réduire la consommation à une valeur minimale en utilisant exclusivement des composants simples tels que des transistors MosFet, des résistances, condensateurs et diodes ; et éventuellement des amplificateurs opérationnels à transistors.

Un autre objet de l'invention est aussi de permettre la commande de ce système d'entrainement par un seul signal électrique bipolaire (prenant deux états distincts) ne nécessitant pas obligatoirement un système intelligent d'analyse et de traitement.

Le niveau haut correspond au niveau de tension nécessaire à l'atteinte d'une position préférentielle d'activation, et le niveau bas correspond à une tension électrique inférieure au niveau haut, une tension nulle ou une absence de signal traduisant l'activation de la position de sécurité.

De manière générale, le signal définissant les niveaux haut et bas est un signal de tension, par exemple un signal appliqué par un interrupteur piloté raccordé à une source de tension.

L'invention concerne selon son acception la plus générale un système d'entrainement d'un organe mobile, comprenant :
- un premier actionneur déplaçant ledit organe mobile,
- un élément de rappel apte à amener l'organe mobile en une position de sécurité,
- un moyen de verrouillage de la position de l'organe mobile en une position préférentielle d'activation,
- un deuxième actionneur apte à libérer ledit moyen de verrouillage,
- un circuit électronique de commande
le circuit électronique étant alimenté par un signal électrique bipolaire ayant un niveau haut et un niveau bas, le circuit électronique comportant un moyen de stockage d'énergie,
- ledit circuit électronique commandant, lorsque le signal passe d'un état « bas » à un état « haut », l'activation du premier actionneur, pendant une durée prédéterminée, pour assurer le déplacement et le verrouillage de la position de l'organe d'obturation dans la position préférentielle d'activation,
- ledit circuit électronique commandant, lorsque le signal passe d'un état « haut » à un état « bas», ou en cas de défaillance dudit signal électrique bipolaire, l'activation du deuxième actionneur par l'intermédiaire de l'énergie fournie par ledit moyen de stockage, pour commander le déverrouillage et permettre le retour de l'organe mobile dans la position de sécurité sous l'action de l'élément de rappel,
- ledit circuit électronique commandant en outre le maintien de la position de sécurité et de la position préférentielle d'activation de l'organe mobile sans consommation électrique de courant desdits actionneurs,
- ledit circuit électronique consommant, pour le maintien de la position préférentielle d'activation, un courant correspondant à la consommation en mode veille de l'ordre de quelques milliampères à quelques dizaines de milliampères.

On entend par mode veille, l'état du circuit électronique lorsque le signal électrique bipolaire est à son état « haut » sans consommation électrique des deux actionneurs. On peut par exemple caractériser la consommation en mode veille en faisant passer le signal électrique bipolaire de l'état « bas » à l'état « haut » et en mesurant l'évolution du courant consommé par le circuit électronique. Lorsque la consommation électrique des deux actionneurs devient nulle (ce qui peut être aisément mesurée en suivant directement le courant circulant dans les actionneurs), on mesure une consommation électrique résiduelle correspondant à la « consommation en mode veille ».

On entend par consommation en mode veille, un courant consommé par le circuit électronique afin d'assurer la gestion du système, hors courant de fuite. Typiquement cette consommation est supérieure à 10mA.

L'invention peut être mise en œuvre selon deux choix technologiques :
- une première variante technologique consiste à utiliser un circuit électronique exclusivement « discret » utilisant uniquement des composants discrets sans recours impératif à une intelligence embarquée (type microprocesseur). On entendra par « composants discrets », au sens du présent brevet, un composant électronique de base dont le rôle est de réaliser une fonction élémentaire, qui peut être un composant passif (résistance, condensateur, inductance, diode) ou actif (, transistor, transistor Darlington, MOSFET, IGBT, AOP). Ne sont pas considérés comme « composants discrets », au sens du présent brevet, des circuits intégrés et des circuits hybrides. Le circuit électronique de commande détecte les changements d'état « haut » et « bas » dudit signal électrique bipolaire en comparant une tension de référence fixe à une tension évoluant en fonction du temps, cette détection étant réalisée par au moins un comparateur à hystérésis pilotant de manière stable un transistor.
- une deuxième variante technologique consiste à utiliser pour le circuit électronique un composant actif et intelligent tel qu'un microcontrôleur, assurant directement la détection des changements d'état « haut » et « bas » dudit signal électrique bipolaire.

Avantageusement, le moyen de stockage d'énergie assure temporairement l'alimentation du circuit électronique de commande lorsque le signal électrique est dans un état de niveau bas, ou en cas de défaillance dudit signal électrique bipolaire.

De préférence, le système comporte plusieurs phases de fonctionnement, notamment :
- dans une première phase, le passage du niveau bas au niveau haut du signal électrique bipolaire provoque un déplacement dudit organe d'obturation de la position de sécurité vers la position préférentielle d'activation avec une consommation non nulle de courant dudit premier actionneur,
- dans une deuxième phase, en ce qu'un maintien du niveau haut du signal électrique bipolaire provoque un maintien de la position préférentielle d'activation dudit organe d'obturation avec une consommation nulle de courant des premier et deuxième actionneurs et avec une consommation non nulle, de l'ordre de quelques milliampères à quelques dizaines de milliampères du circuit électronique de commande,
- dans une troisième phase, en ce qu'un changement du niveau haut au niveau bas du signal électrique bipolaire provoque l'activation dudit deuxième actionneur et la libération dudit organe d'obturation, permettant ainsi au moyen de rappel de ramener ledit organe d'obturation de la position préférentielle d'activation à la position de sécurité avec une consommation nulle de courant dudit premier actionneur,
- dans une quatrième phase, en ce qu'un maintien du niveau bas du signal électrique bipolaire provoque un maintien de la position de sécurité dudit organe d'obturation avec une consommation nulle de courant des premier et deuxième (502) actionneurs.

Préférentiellement, l'énergie permettant l'activation dudit deuxième actionneur et la libération dudit organe d'obturation provient dudit moyen de stockage appartenant au circuit électronique de commande.

Avantageusement, l'énergie dudit moyen de stockage appartenant audit circuit électronique de commande, est accumulée lors de la première phase et déchargée lors de la troisième phase.

De préférence, la décharge de l'énergie contenue dans ledit moyen de stockage vers ledit deuxième actionneur est réalisée avec un retard prédéterminée par rapport à la détection des changements d'état « haut » et « bas » dudit signal électrique bipolaire.

De préférence pour un circuit électronique de commande « discret », le retard prédéterminé provient de la décharge d'un condensateur à travers un réseau d'impédance.

De préférence pour un circuit électronique de commande « intelligent », le retard prédéterminé provient dudit composant actif et intelligent.

De manière générale, le moyen de stockage accumule l'énergie sous forme électrique et peut être un condensateur ou un accumulateur.

Avantageusement, le premier actionneur, l'élément de rappel, le moyen de verrouillage, le deuxième actionneur, le circuit électronique de commande sont intégrés dans un boitier fermé et étanche.

Particulièrement, ledit organe mobile est une vanne de circulation de fluide.

### BREVE DESCRIPTION DES FIGURES

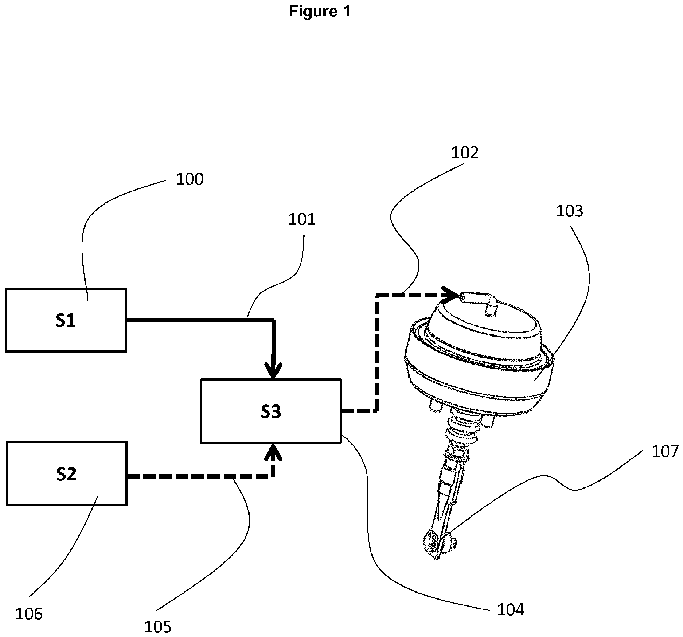

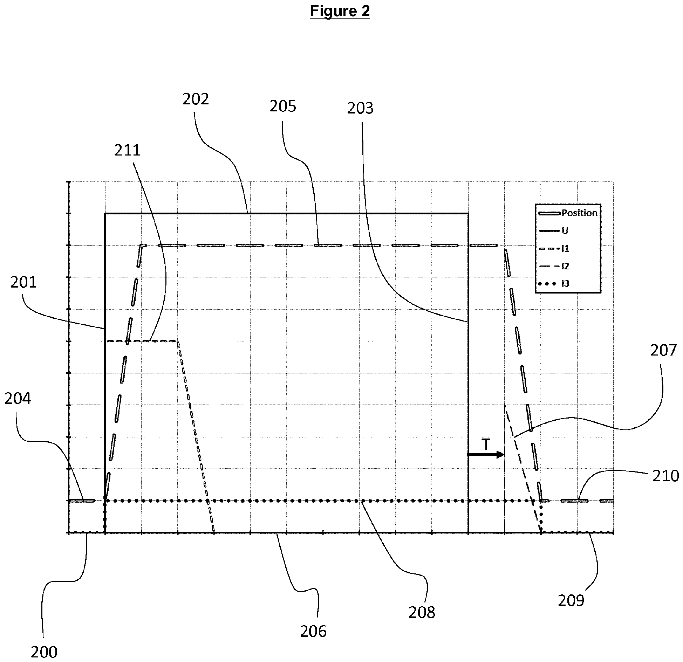

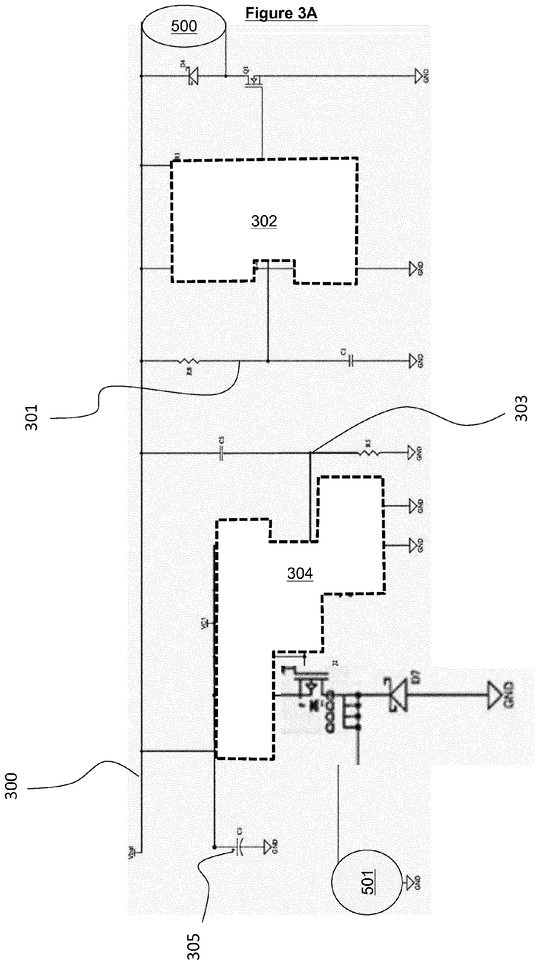

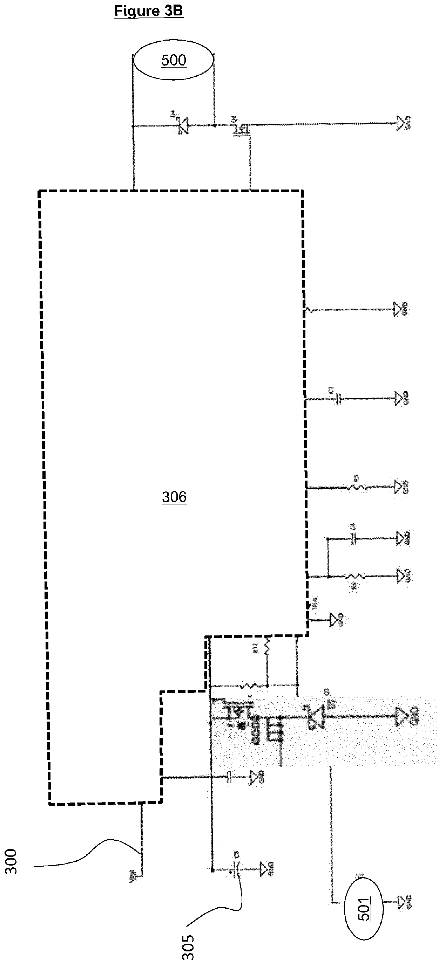

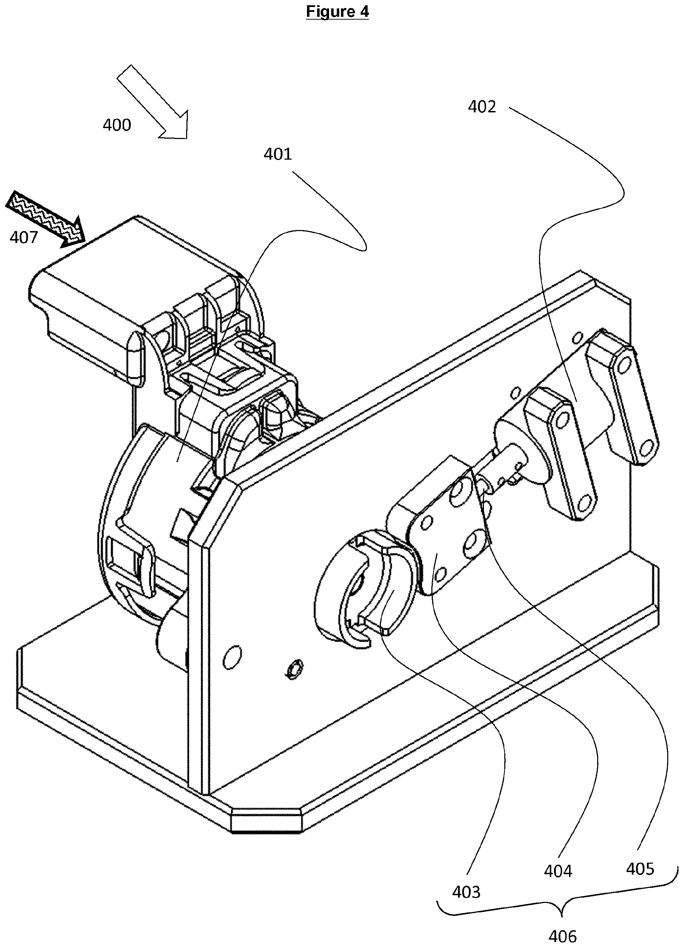

D'autres caractéristiques et avantages de l'invention ressortiront à la lecture qui suit d'exemples de réalisation détaillés, en référence aux figures annexées qui représentent respectivement :
**La** **figure 1****,** un schéma de principe du fonctionnement d'un système d'entrainement d'une vanne de circulation de fluide selon l'art antérieur,
**La** **figure 2****,** un graphique de l'évolution des différentes grandeurs électriques en fonction du temps d'un système d'entrainement d'un organe mobile selon l'invention,
**La** **figures 3A****,** un schéma électrique d'un mode de réalisation du circuit électronique de commande de type « discret » selon l'invention,
**La** **figures 3B****,** un schéma électrique d'un mode de réalisation du circuit électronique de commande de type « intelligent » selon l'invention,
**La** **figure 4****,** une vue générale de trois quart d'un mode de réalisation du système d'entrainement d'un organe mobile selon l'invention,

### DESCRIPTION DETAILLEE D'UN MODE DE REALISATION

La **figure 1** représente un schéma de principe du fonctionnement d'un système d'entrainement d'une vanne de circulation de fluide selon l'art antérieur. Dans cette réalisation classique, le système d'entrainement se compose d'un actionneur pneumatique **103** intégrant un ressort de rappel en position de sécurité (non visible sur la figure) et activant en translation une tige de commande **107** reliée à l'organe d'obturation de la vanne de circulation de fluide (non représentés sur la figure).

L'actionneur pneumatique **103** est piloté par une dépression. Cette dépression est créée en permanence grâce à une pompe à vide **106** qui alimente l'actionneur **103** au travers d'une première conduite pneumatique **105,** d'une électrovanne de commande **104** et d'une deuxième conduite pneumatique **102.**

Le pilotage de l'électrovanne de commande **104** est assuré par un calculateur **100** qui envoie des signaux de consigne à l'électrovanne **104** par l'intermédiaire d'un circuit électrique **101.** Ce calculateur **100** ne fait pas partie du système objet de l'invention, mais de l'équipement extérieur au système. Ce calculateur, ou l'alimentation du système objet de l'invention, ou la transmission des signaux entre le calculateur et le système objet de l'invention, peuvent présenter des défaillances, et c'est dans le cas de telles défaillances que l'organe commandé doit revenir en position préférentielle, en tout circonstance.

Ainsi, lorsque le calculateur **100** détecte le besoin d'amener l'organe d'obturation de la vanne de circulation de fluide dans une position préférentielle d'activation, il envoie un signal de consigne d'activation à l'électrovanne **104** par l'intermédiaire du circuit électrique **101** pour que l'électrovanne **104** permette l'alimentation en dépression de l'actionneur **103** via la deuxième conduite pneumatique **102,** induisant ainsi un mouvement de la tige de commande **107.** Cette configuration est maintenue tant que le calculateur **100** considère que la position préférentielle d'activation de l'organe d'obturation de la vanne de circulation de fluide doit être maintenue.

Lorsque le calculateur **100** détecte le besoin d'amener l'organe d'obturation de la vanne de circulation de fluide dans une position de sécurité, il envoie un signal de consigne de non-activation à l'électrovanne **104** par l'intermédiaire du circuit électrique **101** pour que l'électrovanne **104** interdise l'alimentation en dépression de l'actionneur **103** via la deuxième conduite pneumatique **102,** induisant ainsi un mouvement de la tige de commande **107** sous l'effet du ressort de rappel intégré dans l'actionneur **103.** Cette configuration est maintenue tant que le calculateur **100** considère que la position de sécurité de l'organe d'obturation de la vanne de circulation de fluide doit être maintenue.

La **figure 2****,** représente un graphique de l'évolution des différentes grandeurs électriques en fonction du temps d'un système d'entrainement d'un organe mobile selon l'invention, notamment le signal électrique bipolaire « U » alimentant le système, la position de l'organe mobile « Position », le courant consommé par le premier actionneur « I1 », le courant consommé par le deuxième actionneur « I2 », le courant consommé par le circuit électronique de commande « I3 ».

Le signal électrique « U » alimentant le système est constitué par un seul signal bipolaire dont le niveau haut **202** assure à la fois la fonction d'alimentation de puissance du premier actionneur, la charge du moyen de stockage et la fonction de consigne, pour assurer la commande de déplacement de l'organe mobile. Son niveau « bas » **200** assure également la fonction de consigne et de commande de l'activation du deuxième actionneur par l'intermédiaire de la décharge du moyen de stockage.

Le passage **201** du signal bipolaire « U » alimentant le système d'entrainement selon l'invention d'un niveau bas **200** à un niveau haut **202** commande l'activation du premier actionneur dont le courant consommé « I1 » passe d'une valeur nulle à une valeur non nulle **211,** de plusieurs ampères et pendant une période donnée, permettant ainsi le déplacement de l'organe mobile d'une position de sécurité **204** à une position préférentielle d'activation **205.** Une fois la position d'activation **205** atteinte, le moyen de verrouillage du système d'entrainement selon l'invention s'active et le courant consommé « I1 » par le système d'entrainement passe d'une valeur non-nulle **211** à une valeur nulle **206** sous l'effet du circuit électronique dont le fonctionnement est décrit, à titre d'exemple, sur les **figures 3A** **et** **3B****,** tout en maintenant la position préférentielle d'activation **205.** Le circuit électronique de commande consomme un courant « I3 » non nul **208** de l'ordre de quelques dizaines de milliampères, le courant **208** étant fourni par le signal bipolaire « U » quand il se trouve à son niveau haut **202.** Le courant **208,** lorsque le signal bipolaire « U » est à son niveau haut **202** et lorsque les courants « I1 » et « I2 » consommés par les deux actionneurs sont nuls, correspond à la consommation en mode veille du circuit électronique. Cette configuration de fonctionnement est maintenue tant que le signal bipolaire alimentant le système d'entrainement selon l'invention reste à un niveau haut **202.**

Le passage **203** du signal bipolaire « U » alimentant le système d'entrainement selon l'invention d'un niveau haut **202** à un niveau bas **200,** commande l'activation du deuxième actionneur avec un retard prédéterminé « T ». Le courant « I2 » activant le deuxième actionneur, dont le niveau était nul jusqu'au passage **203** compensé du retard « T », passe à une valeur non nulle **207** de l'ordre de quelques ampères, ce courant provenant d'un élément de stockage d'énergie du circuit électronique de commande. Le moyen de verrouillage de la position préférentielle d'activation **205** de l'organe mobile est alors libéré et l'élément de rappel du système d'entrainement selon l'invention amène l'organe mobile d'une position préférentielle d'activation **205** à une position de sécurité **210** équivalente à la position initiale de sécurité **204.** Le circuit électronique de commande consomme un courant « I3 » non nul **208** de l'ordre de quelques dizaines de milliampères, le courant **208** étant fourni par le moyen de stockage d'énergie dès lors que le signal bipolaire « U » se trouve à son niveau bas **200.** Cette configuration de fonctionnement est maintenue tant que le signal bipolaire alimentant le système d'entrainement selon l'invention reste à un niveau bas **200,** avec une consommation nulle **209** des actionneurs « I1 », « I2 » et du circuit électronique de commande « I3 », une fois que le moyen de stockage est déchargé.

La **figure 3A** représente un schéma électrique d'un mode de réalisation du circuit électronique de commande de type « discret » selon l'invention, permettant de gérer les états verrouillés et déverrouillés. Le circuit électronique est alimenté par un signal bipolaire **300,** il est composé d'éléments discrets tels que des résistances, des inductances, des capacités, des transistors, des diodes, des amplificateurs opérationnels. L'utilisation de composants électroniques actifs tels que des puces, ASIC, microcontrôleurs ou tout autre système intelligent capable de recevoir un signal, de l'interpréter, de le traiter, de le modifier et de l'envoyer pour ordonner une action à un système en aval est proscrite : il s'agit d'un circuit électronique sans intelligence embarquée.

Le premier actionneur **500** du système d'entrainement selon l'invention est constitué d'une résistance et d'une inductance. Selon le niveau haut ou bas du signal bipolaire d'alimentation **300,** la branche **301** du circuit électronique commande la commutation stable du composant (type transistor) Q1. Lorsque le signal électrique mesuré sur la branche **301** passe par une valeur seuil prédéterminée, comprise entre le niveau haut et le niveau bas, définie par un pont diviseur, le comparateur à hystérésis **302** commande le basculement du transistor Q1 gérant le niveau de courant consommé par le premier actionneur **500** de manière franche et stable. La largeur de l'hystérésis a une valeur de quelques volts et permet d'éviter les régimes transitoires où le transistor commute de manière incontrôlée entre deux états instables.

Le deuxième actionneur **501** du système d'entrainement selon l'invention est constitué d'une résistance et d'une inductance. Un élément de stockage d'énergie **305** sous la forme d'un condensateur C3, par exemple d'une capacité de 1mF, apte à emmagasiner et conserver de l'énergie électrique, est chargé quand le signal d'alimentation bipolaire **300** est à son niveau haut. Selon le niveau haut ou bas du signal bipolaire d'alimentation **300,** la branche **303** du circuit électronique commande la commutation stable du composant (type transistor) Q2 et permet de gérer ainsi la charge du moyen de stockage **305** et la décharge du moyen de stockage **305** à travers le deuxième actionneur. Lorsque le signal électrique mesuré sur la branche **303** passe par une valeur seuil prédéterminée, comprise entre le niveau haut et le niveau bas, définie par un pont diviseur, le comparateur à hystérésis **304** commande le basculement du transistor Q2 gérant le moyen de stockage **305** et le niveau de courant consommé par le deuxième actionneur. La largeur de l'hystérésis a une valeur de quelques volts et permet d'éviter les régimes transitoires où le transistor commute de manière incontrôlée entre deux états instables.

Afin de compenser les constantes de temps électriques et mécaniques des premier et deuxième actionneurs, typiquement pour éviter d'initier la décharge de l'élément de stockage **305** dans le deuxième actionneur alors que le premier actionneur est encore activé ; et pour détecter et identifier les changements de niveau haut-bas volontaires du signal bipolaire **300** des changements involontaires et intempestifs tels que des microcoupures ou instabilités, un retard prédéterminé est introduit entre la commutation du composant Q1 et la commutation du composant Q2 apte à commuter Q2 après Q1. La branche **303** du circuit électronique permet d'assurer cette fonction de retard par la décharge du condensateur C5 dans un réseau d'impédance appartenant au comparateur à hystérésis 302.

La **figure 3B** représente un schéma électrique d'un mode de réalisation du circuit électronique de commande de type « intelligent » selon l'invention, permettant de gérer les états verrouillés et déverrouillés. Le circuit électronique est alimenté par un signal bipolaire **300,** il est composé d'éléments discrets tels que des résistances, des inductances, des capacités, des transistors, des diodes, des amplificateurs opérationnels, et d'au moins un composant intelligent tel que par exemple un microcontrôleur programmable.

Le circuit électronique comporte un élément de stockage d'énergie **305** sous la forme d'un condensateur C3, un transistor Q1 pilotant le premier actionneur **500,** un transistor Q2 pilotant le deuxième actionneur **501** et le moyen de stockage **305,** et un microcontrôleur **306** programmé pour gérer et ordonner en fonction des états haut et bas du signal bipolaire **300** la commutation des transistors Q1, Q2 et le retard prédéterminé et volontaire entre la commutation de Q1 et Q2.

La **figure 4** représente une vue générale de trois quart d'un mode de réalisation du système d'entrainement d'un organe mobile selon l'invention. Le système d'entrainement **400** est alimenté par un signal bipolaire **407** et comporte un premier actionneur **401** apte à déplacer un premier élément mobile **403** solidaire de l'organe mobile (non représentés sur la figure) dans une position préférentielle d'activation. Le système d'entrainement **400** comporte également un moyen de verrouillage **406** en position préférentielle d'activation constitué par un élément de guidage **404,** un deuxième élément mobile **405** activé par un système élastique (non visible sur la figure) et un élément spécifique **403** déplacé par le premier actionneur **401.** Le système d'entrainement **400** comporte aussi un élément de rappel (non visible sur la figure) apte à déplacer le premier élément mobile **403** dans une position de sécurité et un deuxième actionneur **402** agissant sur le deuxième élément mobile **405** et apte à libérer le moyen de verrouillage **406.** Le système d'entrainement **400** comporte enfin un circuit électronique de commande dont le fonctionnement est décrit, à titre d'exemple, sur les **figures 3A** **et** **3B****.**

## Revendications

1. Système d'entrainement d'un organe mobile, comprenant un premier actionneur (103, 500) déplaçant ledit organe mobile, un élément de rappel apte à amener l'organe mobile en une position de sécurité, un moyen de verrouillage de la position de l'organe mobile en une position préférentielle d'activation (205), un deuxième actionneur (104, 501) apte à libérer ledit moyen de verrouillage, ledit système comprenant en outre un circuit électronique de commande (101) **caractérisé en ce que** ledit circuit électronique est alimenté par un signal électrique bipolaire (300) ayant un niveau haut (202) et un niveau bas (200), et comportant un moyen de stockage d'énergie (305),
• ledit circuit électronique commandant, lorsque le signal passe d'un état « bas » à un état « haut », l'activation du premier actionneur, pendant une durée prédéterminée, pour assurer le déplacement et le verrouillage de la position de l'organe d'obturation dans la position préférentielle d'activation,
• ledit circuit électronique commandant, lorsque le signal passe d'un état « haut » à un état « bas», ou en cas de défaillance dudit signal électrique bipolaire, l'activation du deuxième actionneur par l'intermédiaire de l'énergie fournie par ledit moyen de stockage, pour commander le déverrouillage et permettre le retour de l'organe mobile dans la position de sécurité sous l'action de l'élément de rappel,
• ledit circuit électronique commandant en outre le maintien de la position de sécurité et de la position préférentielle d'activation de l'organe mobile sans consommation électrique de courant desdits actionneurs,
ledit circuit électronique consommant, pour le maintien de la position préférentielle d'activation, un courant correspondant à la consommation en mode veille, ledit circuit électronique de commande (101) étant exclusivement « discret » en utilisant uniquement des composants discrets sans recours à une intelligence embarquée,
ledit circuit électronique de commande (101) détectant les changements d'état « haut » et « bas » dudit signal électrique bipolaire (300) en comparant une tension de référence fixe à une tension évoluant en fonction du temps, et cette détection étant réalisée par au moins un comparateur à hystérésis (302, 304) pilotant de manière stable un transistor.

2. Système d'entrainement d'un organe mobile, comprenant un premier actionneur (103, 500) déplaçant ledit organe mobile, un élément de rappel apte à amener l'organe mobile en une position de sécurité, un moyen de verrouillage de la position de l'organe mobile en une position préférentielle d'activation (205), un deuxième actionneur (104, 501) apte à libérer ledit moyen de verrouillage, ledit système comprenant en outre un circuit électronique de commande (101) **caractérisé en ce que** ledit circuit électronique est alimenté par un signal électrique bipolaire (300) ayant un niveau haut (202) et un niveau bas (200), et comportant un moyen de stockage d'énergie (305),
• ledit circuit électronique commandant, lorsque le signal passe d'un état « bas » à un état « haut », l'activation du premier actionneur, pendant une durée prédéterminée, pour assurer le déplacement et le verrouillage de la position de l'organe d'obturation dans la position préférentielle d'activation,
• ledit circuit électronique commandant, lorsque le signal passe d'un état « haut » à un état « bas», ou en cas de défaillance dudit signal électrique bipolaire, l'activation du deuxième actionneur par l'intermédiaire de l'énergie fournie par ledit moyen de stockage, pour commander le déverrouillage et permettre le retour de l'organe mobile dans la position de sécurité sous l'action de l'élément de rappel,
• ledit circuit électronique commandant en outre le maintien de la position de sécurité et de la position préférentielle d'activation de l'organe mobile sans consommation électrique de courant desdits actionneurs,
ledit circuit électronique consommant, pour le maintien de la position préférentielle d'activation, un courant correspondant à la consommation en mode veille,
ledit circuit électronique de commande (101) utilisant au moins un composant actif et intelligent tel qu'un microcontrôleur (306).

3. Système d'entrainement d'un organe mobile, selon la revendication 2, **caractérisé en ce que** ledit circuit électronique de commande détecte les changements d'état « haut » et « bas » dudit signal électrique bipolaire par l'intermédiaire dudit composant actif et intelligent.

4. Système d'entrainement d'un organe mobile selon l'une quelconque des revendications précédentes **caractérisé en ce que** ledit moyen de stockage d'énergie (305) assure temporairement l'alimentation dudit circuit électronique de commande (101) lorsque ledit signal électrique est dans un état de niveau bas (200), ou en cas de défaillance dudit signal électrique bipolaire (300).

5. Système d'entrainement d'un organe mobile selon l'une quelconque des revendications précédentes **caractérisé en ce que** ledit niveau haut (202) correspond à une tension électrique nécessaire à l'activation de la position préférentielle d'activation (205) **et en ce que** ledit niveau bas (200) correspond à une tension électrique inférieure au niveau haut (202), une tension nulle ou une absence de signal suite à une défaillance.

6. Système d'entrainement d'un organe mobile selon l'une quelconque des revendications précédentes **caractérisé en ce que**
• dans une première phase, le passage du niveau bas (200) au niveau haut (202) du signal électrique bipolaire provoque un déplacement dudit organe d'obturation de la position de sécurité vers la position préférentielle d'activation (205) avec une consommation non nulle de courant dudit premier actionneur (103, 500),
• dans une deuxième phase, **en ce qu'**un maintien du niveau haut (202) du signal électrique bipolaire (300) provoque un maintien de la position préférentielle d'activation (205) dudit organe d'obturation avec une consommation nulle de courant des premier (103, 500) et deuxième actionneurs (104, 501) et avec une consommation non nulle de l'ordre de quelques milliampères à quelques dizaines de milliampères du circuit électronique de commande (101),
• dans une troisième phase, **en ce qu'**un changement du niveau haut (202) au niveau bas (200) du signal électrique bipolaire (300), ou en cas de défaillance dudit signal électrique bipolaire (300), provoque l'activation dudit deuxième actionneur (104, 501) et la libération dudit organe d'obturation, permettant ainsi au moyen de rappel de ramener ledit organe d'obturation de la position préférentielle d'activation (205) à la position de sécurité avec une consommation nulle de courant dudit premier actionneur,
• dans une quatrième phase, **en ce qu'**un maintien du niveau bas (200) du signal électrique bipolaire (300) provoque un maintien de la position de sécurité dudit organe d'obturation avec une consommation nulle de courant des premier et deuxième actionneurs.

7. Système d'entrainement d'un organe mobile selon l'une quelconque des revendications précédentes **caractérisé en ce que** l'énergie dudit moyen de stockage (305) appartenant audit circuit électronique de commande (101), est accumulée lors de la première phase.

8. Système d'entrainement d'un organe mobile selon l'une quelconque des revendications précédentes **caractérisé en ce que** l'énergie dudit moyen de stockage (305) appartenant audit circuit électronique de commande (101), est déchargée lors de la troisième phase.

9. Système d'entrainement d'un organe mobile selon l'une quelconque des revendications précédentes **caractérisé en ce que** la décharge de l'énergie contenue dans ledit moyen de stockage (305) vers ledit deuxième actionneur (104, 501) est réalisée avec un retard prédéterminé par rapport à la détection des changements d'état « haut » et « bas » dudit signal électrique bipolaire (300).

10. Système d'entrainement d'un organe mobile selon les revendications 1 et 9 **caractérisé en ce que** ledit retard prédéterminé provient de la décharge d'un condensateur (C5) à travers un réseau d'impédance.

11. Système d'entrainement d'un organe mobile selon les revendications 3 et 9 **caractérisé en ce que** ledit retard prédéterminée provient dudit composant actif et intelligent.

12. Système d'entrainement d'un organe mobile selon l'une quelconque des revendications précédentes **caractérisé en ce que** ledit moyen de stockage accumule l'énergie sous forme électrique.

13. Système d'entrainement d'un organe mobile selon l'une quelconque des revendications précédentes **caractérisé en ce que** ledit moyen de stockage est un condensateur.

14. Système d'entrainement d'un organe mobile selon l'une quelconque des revendications précédentes **caractérisé en ce que** ledit élément de stockage est un accumulateur.

15. Système d'entrainement d'un organe mobile selon l'une quelconque des revendications précédentes **caractérisé en ce que** le premier actionneur, l'élément de rappel, le moyen de verrouillage, le deuxième actionneur, le système électronique sont intégrés dans un boitier fermé et étanche.

16. Système d'entrainement d'un organe mobile, selon l'une quelconque des revendications précédentes **caractérisé en ce que** ledit organe mobile est une vanne de circulation de fluide.

## Patentansprüche

1. Antriebssystem für ein bewegliches Element mit einem ersten Stellglied (103, 500), das das bewegliche Element bewegt, einem Rückstellelement, das das bewegliche Element in eine Sicherheitsposition bringen kann, einem Mittel zum Verriegeln der Position des beweglichen Elements in einer bevorzugten Aktivierungsposition (205), und einem zweiten Stellglied (104, 501), das das Verriegelungsmittel lösen kann, wobei das System des Weiteren eine elektronische Steuerschaltung (101) umfasst, **dadurch gekennzeichnet, dass** der elektronischen Schaltung ein bipolares elektrisches Signal (300) mit einem hohen Pegel (202) und einem niedrigen Pegel (200)zugeführt wird, und einem Energiespeichermittel (305),
• wobei die elektronische Schaltung, wenn das Signal von einem "niedrigen" in einen "hohen" Zustand wechselt, die Aktivierung des ersten Stellglieds für eine bestimmte Zeit steuert, um die Verschiebung und die Verriegelung der Position des Schließelements in der bevorzugten Aktivierungsposition zu gewährleisten,
• wobei die elektronische Schaltung, wenn das Signal von einem "hohen" in einen "niedrigen" Zustand übergeht, oder das bipolare elektrische Signal ausfällt, die Aktivierung des zweiten Stellglieds über die vom Speichermittel zugeführte Energie steuert, um die Entriegelung zu steuern und das bewegliche Element unter Einwirkung des Rückstellelements in die Sicherheitsposition zurück kehren zu lassen,
• die elektronische Schaltung ferner das Aufrechterhalten der Sicherheitsposition und der bevorzugten Aktivierungsposition des beweglichen Elements steuert, ohne dass die Stellglieder Strom verbrauchen würden,
• wobei die elektronische Schaltung zum Aufrechterhalten der bevorzugten Aktivierungsposition Strom verbraucht, der dem Standby-Verbrauch entspricht, wobei die elektronische Steuerschaltung (101) ausschließlich "diskret" ist, da nur diskrete Bauteile und keine integrierte Intelligenz verwendet werden, wobei die elektronische Steuerschaltung (101) die Wechsel des bipolaren elektrischen Signals (300) zwischen dem "hohen" und "niedrigen" Zustand durch Vergleichen einer festen Referenzspannung mit einer sich zeitlich verändernden Spannung erfasst, und diese Erfassung durch mindestens einen Komparator mit Hysterese (302, 304) durchgeführt wird, der einen Transistor stabil steuert.

2. Antriebssystem für ein bewegliches Element mit einem ersten Stellglied (103, 500), das das bewegliche Element bewegt, einem Rückstellelement, das das bewegliche Element in eine Sicherheitsposition bringen kann, einem Mittel zum Verriegeln der Position des beweglichen Elements in einer bevorzugten Aktivierungsposition (205), und einem zweiten Stellglied (104), 501), das das Verriegelungsmittel lösen kann, wobei das System des Weiteren eine elektronische Steuerschaltung (101) umfasst, **dadurch gekennzeichnet, dass** der elektronischen Schaltung ein bipolares elektrisches Signal (300) mit einem hohen Pegel (202) und einem niedrigen Pegel (200) zugeführt wird, und einem Energiespeichermittel (305),
• wobei die elektronische Schaltung, wenn das Signal von einem "niedrigen" in einen "hohen" Zustand wechselt, die Aktivierung des ersten Stellglieds für eine bestimmte Zeit steuert, um die Verschiebung und die Verriegelung der Position des Schließelements in der bevorzugten Aktivierungsposition zu gewährleisten,
• wobei die elektronische Schaltung, wenn das Signal von einem "hohen" in einen "niedrigen" Zustand übergeht, oder das bipolare elektrische Signal ausfällt, die Aktivierung des zweiten Stellglieds über die vom Speichermittel zugeführte Energie steuert, um die Entriegelung zu steuern und das bewegliche Element unter Einwirkung des Rückstellelements in die Sicherheitsposition zurück kehren zu lassen,
• wobei die elektronische Schaltung ferner das Aufrechterhalten der Sicherheitsposition und der bevorzugten Aktivierungsposition des beweglichen Elements steuert, ohne dass die Stellglieder Strom verbrauchen würden,
• wobei die elektronische Schaltung zum Aufrechterhalten der bevorzugten Aktivierungsposition Strom verbraucht, der dem Standby-Verbrauch entspricht, wobei die elektronische Schaltung (101) mindestens ein aktives und intelligentes Bauteil, wie zum Beispiel einen Mikrocontroller (306), verwendet.

3. Antriebssystem für ein bewegliches Element nach Anspruch 2, **dadurch gekennzeichnet, dass** die elektronische Steuerschaltung die Wechsel zwischen dem "hohen" und "niedrigen" Zustand des bipolaren elektrischen Signals durch das aktive und intelligente Bauteil erfasst.

4. Antriebssystem für ein bewegliches Element nach einem der vorhergehenden Ansprüche, **dadurch gekennzeichnet, dass** das Energiespeichermittel (305) die elektronische Steuerschaltung (101) vorübergehend mit Strom versorgt, wenn das elektrische Signal einen niedrigen Pegel (200) hat oder das bipolare elektrische Signal (300) ausfällt.

5. Antriebssystem für ein bewegliches Element nach einem der vorhergehenden Ansprüche, **dadurch gekennzeichnet, dass** der hohe Pegel (202) einer elektrischen Spannung entspricht, die zum Aktivieren der bevorzugten Aktivierungsposition (205) erforderlich ist, und der niedrige Pegel (200) einer elektrischen Spannung entspricht, die niedriger ist als der hohe Pegel (202) ist, einer Nullspannung oder dem Fehlen des Signals nach einem Ausfall entspricht.

6. Antriebssystem für ein bewegliches Element nach einem der vorhergehenden Ansprüche, **dadurch gekennzeichnet, dass**
• der Übergang vom niedrigen Pegel (200) des bipolaren elektrischen Signals zum hohen Pegel (202) in einer ersten Phase die Bewegung des Schließelements von der Sicherheitsposition zur bevorzugten Aktivierungsposition (205) bewirkt, wobei das erste Stellglied (103, 500) Strom ungleich Null verbraucht,
• in einer zweiten Phase das Aufrechterhalten des hohen Pegels (202) des bipolaren elektrischen Signals (300) das Aufrechterhalten der bevorzugten Aktivierungsposition (205) des Schließelements bewirkt, wobei vom ersten Stellglied (103, 500) und vom zweiten Stellglied (104, 501) ein Strom ungleich Null verbraucht wird und die elektronische Steuerschaltung (101) einen Strom ungleich Null zwischen einigen Milliampere und einigen Dutzend Milliampere verbraucht,
• in einer dritten Phase ein Wechsel des bipolaren elektrischen Signals (300) vom hohen Pegel (202) zum niedrigen Pegel (200) oder der Ausfall des bipolaren elektrischen Signals (300) die Aktivierung des zweiten Stellglieds (104, 501) und das Lösen des Schließelements bewirkt, wodurch das Rückholmittel das Schließelement aus der bevorzugten Aktivierungsposition (205) in die Sicherheitsposition zurückstellen kann, wobei das erste Stellglied keinen Strom verbraucht,
• in einer vierten Phase das Aufrechterhalten des niedrigen Pegels (200) des bipolaren elektrischen Signals (300) das Aufrechterhalten der Sicherheitsposition des Schließelements bewirkt, wobei das erste und das zweite Stellglied keinen Strom verbrauchen.

7. Antriebssystem für ein bewegliches Element nach einem der vorhergehenden Ansprüche, **dadurch gekennzeichnet, dass** die Energie des Speichermittels (305), das zur elektronischen Steuerschaltung (101) gehört, in der ersten Phase gespeichert wird.

8. Antriebssystem für ein bewegliches Element nach einem der vorhergehenden Ansprüche, **dadurch gekennzeichnet, dass** die Energie des zur elektronischen Steuerschaltung (101) gehörenden Speichermittels (305) in der dritten Phase abgegeben wird.

9. Antriebssystem für ein bewegliches Element nach einem der vorhergehenden Ansprüche, **dadurch gekennzeichnet, dass** die Abgabe der im Speichermittel (305) enthaltenen Energie an das zweite Stellglied (104, 501) mit einer vorab festgelegten Verzögerung in Bezug auf die Erfassung der Wechsel zwischen dem "hohen" und dem "niedrigen" Zustand des bipolaren elektrischen Signals (300) erfolgt.

10. Antriebssystem für ein bewegliches Element nach den Ansprüchen 1 und 9, **dadurch gekennzeichnet, dass** die vorab festgelegte Verzögerung von der Entladung eines Kondensators (C5) über ein Impedanznetzwerk kommt.

11. Antriebssystem für ein bewegliches Element nach den Ansprüchen 3 und 9, **dadurch gekennzeichnet, dass** die vorab festgelegte Verzögerung vom aktiven, intelligenten Bauteil kommt.

12. Antriebssystem für ein bewegliches Element nach einem der vorhergehenden Ansprüche, **dadurch gekennzeichnet, dass** das Speichermittel Energie in elektrischer Form speichert.

13. Antriebssystem für ein bewegliches Element nach einem der vorhergehenden Ansprüche, **dadurch gekennzeichnet, dass** das Speichermittel ein Kondensator ist.

14. Antriebssystem für ein bewegliches Element nach einem der vorhergehenden Ansprüche, **dadurch gekennzeichnet, dass** das Speicherelement ein Akkumulator ist.

15. Antriebssystem für ein bewegliches Element nach einem der vorhergehenden Ansprüche, **dadurch gekennzeichnet, dass** das erste Stellglied, das Rückstellelement, die Verriegelungsmittel, das zweite Stellglied und das elektronische System in ein geschlossenes und abgedichtetes Gehäuse integriert sind.

16. Antriebssystem für ein bewegliches Element nach einem der vorhergehenden Ansprüche, **dadurch gekennzeichnet, dass** das bewegliche Element ein Umlaufventil für Fluide ist.

## Claims

1. A drive system for a mobile member, comprising a first actuator (103, 500) moving said mobile member, a return element able to bring the mobile member into a safe position, a locking means for locking the position of the mobile member in a preferred position of activation (205), a second actuator (104, 501) able to free said locking means, said system further comprising an electronic control circuit (101) **characterized in that** said electronic circuit is fed with a bipolar electrical signal (300) having a high level (202) and a low level (200), and comprising an energy storage means (305),
- said electronic circuit commanding, when the signal passes from a "low" state to a "high" state, the activation of the first actuator, for a predetermined length of time, to ensure that the shutoff member is moved into and locked in position in the preferred position of activation,
- said electronic circuit commanding, when the signal drops from a "high" state to a "low" state, or in the event of failure of said bipolar electrical signal, the activation of the second actuator using the energy supplied by said storage means, to command the unlocking and allow the mobile member to return to the safe position under the action of the return element,
- said electronic circuit further commanding the holding of the safe position and the preferred position of activation of the mobile member with no electrical power consumption of said actuators,
said electronic circuit consuming, for holding the preferred position of activation, a current corresponding to the consumption in standby mode, said electronic control circuit (101) being exclusively "discrete" using only discrete components without recourse to an embedded intelligence,
said electronic control circuit (101) detecting the "high" and "low" state changes of said bipolar electrical signal (300) by comparing a fixed reference voltage to a voltage changing over time, and this detection being performed by at least one hysteresis comparator (302, 304) stably driving a transistor.

2. A drive system for a mobile member, comprising a first actuator (103, 500) moving said mobile member, a return element able to bring the mobile member into a safe position, a locking means for locking the position of the mobile member in a preferred position of activation (205), a second actuator (104, 501) able to free said locking means, said system further comprising an electronic control circuit (101), **characterized in that** said electronic circuit is fed with a bipolar electrical signal (300) having a high level (202) and a low level (200), and comprising an energy storage means (305),
- said electronic circuit commanding, when the signal passes from a "low" state to a "high" state, the activation of the first actuator, for a predetermined length of time, to ensure that the shutoff member is moved into and locked in position in the preferred position of activation,
- said electronic circuit commanding, when the signal drops from a "high" state to a "low" state, or in the event of failure of said bipolar electrical signal, the activation of the second actuator using the energy supplied by said storage means, so as to command unlocking and allow the mobile member to return to the safe position under the action of the return element,
- said electronic circuit further commanding the holding of the safe position and the preferred position of activation of the mobile member with no electrical power consumption of said actuators,
said electronic circuit consuming, for holding the preferred position of activation, a current corresponding to the consumption in standby mode, said electronic control circuit (101) using at least one active and intelligent component such as a microcontroller (306).

3. A drive system for a mobile member, according to claim 2, **characterized in that** said electronic control circuit detects the "high" and "low" state changes of said bipolar electrical signal through said active and intelligent component.

4. A drive system for a mobile member according to any one of the preceding claims, **characterized in that** said energy storage means (305) temporarily supplies power to said electronic control circuit (101) when said electrical signal is in a low level state (200), or in the event of failure of said bipolar electrical signal (300) .

5. A drive system for a mobile member according to any one of the preceding claims, **characterized in that** said high level (202) corresponds to an electrical voltage necessary to activate the preferred position of activation (205) and **in that** said low level (200) corresponds to an electrical voltage lower than the high level (202), a zero voltage or an absence of a signal following a failure.

6. A drive system for a mobile member according to any one of the preceding claims, **characterized in that**
- in a first phase, the passage from the low level (200) to the high level (202) of the bipolar electrical signal causes said shutoff member to move from the safe position to the preferred position of activation (205) with a non-zero current consumption of said first actuator (103, 500),
- in a second phase, **in that** holding the high level (202) of the bipolar electrical signal (300) causes the holding of the preferred position of activation (205) of said shutoff member with zero current consumption of the first (103, 500) and second (104, 501) actuators and with non-zero current consumption in the range of a few milliamperes to tens of milliamperes of the electronic control circuit (101),
- in a third phase, **in that** a change from the high level (202) to the low level (200) of the bipolar electrical signal (300), or in the event of failure of said bipolar electrical signal (300), causes said second actuator (104, 501) to be activated and said shutoff member to be freed, thereby allowing the return means to return said shutoff member from the preferred position of activation (205) to the safe position with zero current consumption of said first actuator,
- in a fourth phase, **in that** holding the low level (200) of the bipolar electrical signal (300) causes the safe position of said shutoff member to be held with zero current consumption of the first and second actuators.

7. A drive system for a mobile member according to any one of the preceding claims, **characterized in that** the energy of said storage means (305) belonging to said electronic control circuit (101) is accumulated during the first phase.

8. A drive system for a mobile member according to any one of the preceding claims, **characterized in that** the energy of said storage means (305) belonging to said electronic control circuit (101) is discharged during the third phase.

9. A drive system for a mobile member according to any one of the preceding claims, **characterized in that** the discharge of the energy contained in said storage means (305) to said second actuator (104, 501) is carried out with a predetermined delay with respect to the detection of "high" and "low" state changes of said bipolar electrical signal (300).

10. A drive system for a mobile member according to claims 1 and 9, **characterized in that** said predetermined delay comes from the discharge of a capacitor (C5) through an impedance network.

11. A drive system for a mobile member according to claims 3 and 9, **characterized in that** said predetermined delay comes from said active and intelligent component.

12. A drive system for a mobile member according to any one of the preceding claims, **characterized in that** said storage means accumulates energy in electrical form.

13. A drive system for a mobile member according to any one of the preceding claims, **characterized in that** said storage means is a capacitor.

14. A drive system for a mobile member according to any one of the preceding claims, **characterized in that** said storage element is an accumulator.

15. A drive system for a mobile member according to any one of the preceding claims, **characterized in that** the first actuator, the return element, the locking means, the second actuator, the electronic system are integrated in a closed and sealed housing.

16. A drive system for a mobile member, according to any one of the preceding claims, **characterized in that** said mobile member is a fluid circulation valve.
